# EUROPÄISCHE PATENTSCHRIFT

(11) **EP 0 683 090 B1**
(45) Veröffentlichungstag und Bekanntmachung des Hinweises auf die Patenterteilung: **08.04.1998**
(21) Anmeldenummer: 95107511.8
(22) Anmeldetag: 17.05.1995
(51) Int. Cl.: B62H 3/08, B62H 3/04

(54) **Doppelfahrradparker**
Double cycle stand
Double porte-vélo

(30) Priorität: 20.05.1994 DE 9408385 U
(43) Veröffentlichungstag der Anmeldung: 22.11.1995
(73) Patentinhaber: Hammerschmidt, Hartwig, D-82110 Germering (DE); Hammerschmidt, Joachim, D-82110 Germering (DE)
(72) Erfinder: Hammerschmidt, Hartwig, D-82110 Germering (DE); Hammerschmidt, Joachim, D-82110 Germering (DE)

(56) Entgegenhaltungen:
- DE-A- 4 336 363
- DE-A- 4 407 062
- DE-U- 9 310 807
- GB-A- 2 129 387

## Beschreibung

Die Erfindung betrifft einen Doppelfahrradparker zum Einstellen von zwei Fahrrädern aus entgegengesetzter Richtung mit bequemer Anschließungsmöglichkeit der Fahrradrahmen an den Parker nach dem Oberbegriff des Anspruchs 1.

Die Anforderungen an gute Fahrradparkersysteme sind in DE-43 36 363 C1 ausführlich dargestellt. Viele der im Handel befindlichen Systeme erfüllen diese Anforderungen nur teilweise.

Fahrradparker kann man nach der Art der Fahrradeinstellung grob in vier wesentliche Klassen einteilen:
1) Anlehnsysteme
2) Aufhängesysteme
3) Rahmengreifersysteme
4) Vorderrad-Haltesysteme

Diese Anmeldung betrifft Fährradparker, die der vierten Klasse angehören. Bei allen Fahrradparkern dieser Klasse wird das Vorderrad des eingestellten Fahrrades fixiert, wodurch sich je nach Art der Fixierung ein mehr oder weniger fester Stand des gesamten Fahrrades ergibt.

Viele Typen dieser Klasse sind seit langem bekannt. Der einfachste Typ ist die Felgenklammer, bei der das Vorderrad auf dem Boden steht und ein relativ geringer Teil des Vorderreifens eingeklemmt wird. In gewissen Fällen, z.B. bei versehentlichem Anstoßen, geneigtem Gelände oder einseitiger Gepäckbelastung kann das Fahrrad leicht herausrollen und/oder umstürzen, wobei die Felge verformt werden kann bzw. andere Fahrradteile beschädigt werden können.

Das Grundprinzip einer herkömmlichen Vorderradführung ist aus DE-PS 567 315 bekannt. Das Vorderrad wird in den Kröpfungen der drei Langsträger dieses Fahrradparkers an drei Punkten gehalten, die maximalen Abstand voneinander haben. In diesem Fahrradparker können Fahrräder mit passendem Raddurchmesser bei äußeren Einflüssen wie beispielsweise Anstoßen oder starkem Wind weder wegrollen noch umfallen. Auch eine Verformungsgefahr des Vorderrades ist so gut wie ausgeschlossen, wenn nicht grobe Gewalt angewandt wird. Diese ideale Drei-Punkte-Prinzip läßt sich heute nicht mehr anwenden, denn häufig befinden sich im Bereich um den oberen Führungspunkt verschiedene Anbauteile wie beispielsweise Schutzblech und Schutzblechhalterung, Lampe, Frontgepäckträger und Körbe. Außerdem kommt der obere Führungspunkt je nach Vorderradgröße (im Normalfall 20 - 28 Zoll) auf verschiedene Höhen zu liegen.

Der in DE-90 06 455 U1 beschriebene Kombinationsfahrradständer hat als wesentliche Bauteile paarig angeordnete Winkelelemente in einem Abstand, die der Breite eines Fahrrad-Vorderrades entsprechen und gleichzeitig einen horizontalen und einen vertikalen Einstellschlitz für das Vorderrad bilden. Dieses System sorgt zwar für einen stabilen Stand des Vorderrades. Es ist aber nicht platzsparend, da es nicht für das Einstellen von Fahrrädern aus entgegengesetzter Richtung mit Überlappung der Vorderräder ausgelegt ist. Außerdem wird ein Anschließbügel als völlig separates Bauteil benötigt.

Der Zweiradständer aus DE-9308960 U1 benutzt auf dem Kopf stehende U-Rohrbügel in abwechselnd entgegengesetzter Schrägstellung. Er benötigt für n Fahrräder immerhin n+1 solche Bügel, von denen jeweils zwei benachbarte einen Einstellplatz begrenzen. Eine besondere Horizontalführung in Einschieberichtung ist nicht vorgesehen. Dadurch können die Vorderradgabel und Anbauteile eines eingestellten Zweirades die einstellseitigen Senkrechtschenkel der Rohrbügel berühren. Auch ergibt sich kein konstanter Abstand der eingestellten Fahrräder.

Aus DE-AS 1170808 ist ein Serien-Fahrradständer bekannt, der zwei untere Aufnahmeelemente und ein oberes Führungselement besitzt, welches in einen waagrecht liegenden Bogen übergeht. Das obere Führungselement liegt nur etwa auf Achshöhe, wodurch auf das eingestellte Vorderrad bei seitlicher Belastung starke seitliche Biegekräfte wirken können. Wegen der zu geringen Höhe des Bogens und weil dieser bei Benutzung vollständig vom Reifen ausgefüllt wird, ist eine Verwendung als Rahmenanschließungsöse für ein etwa von der anderen Seite eingestelltes Fahrrad bei einer Anlage für zweiseitige Fahrradeinstellung weder vorgesehen noch möglich.

Aus GB - 21 29 387 ist eine Fahrradabstellanlage bekannt mit mindesten einem das Voderrad des Fahrrades teilweise umschließenden Haltebügel, der zu dem dem Fahrrad abgekehrten Ende hin konvergiert. Dabei wird unterstellt, daß die Fahrradreifen mit steigendem Durchmesser immer schmäler werder, und so durch die Konvergenz des Haltebügels stets gut geführt werden.

Die Entwicklung der Fahrradtechnik zeigt jedoch, daß heute auch große Fahrradreifen sehr breit angeboten werden und in diese Abstellanlage nicht mehr vollständig eingeparkt werden können.

Weiterhin ist der obere Haltepunkt des Vorderrades nur etwa auf der Höhe der Vorderachse, wodurch unnötig starke Biegekräfte auf das Vorderrad wirken können. Schließlich ist eine Kombination zweier entgegengesetzter Einstellplätze zum Zwecke der Rahmenanschließung nicht erkennbar und auch nicht vorgesehen.

In FR 1327022 wird eine Abstellvorrichtung für motorisierte Zweiräder beschrieben, deren Form auf Vorderräder mit Trommelbremsen zugeschnitten ist. Diese Vorrichtung weist zum einen keine Rahmenanschließungsmöglichkeit auf. Zum anderen sind die einzelnen Führungselemente so angelegt, daß es in Achsnähe zu seitlicher Kraftwirkung auf die Speichen kommt und im Falle von Anbauteilen wie tiefhängenden seitlichen Frontgepäckträger ein Einparken nicht möglich ist. Außerdem bietet die Vorrichtung nicht allen vorkommenden Vorderradgrößen gleichguten seitlichen Halt.

Aus DE-43 36 363 C1 und DE-93 10 807 U1 sind gattungsbildende Fahrradständermodule bekannt, bei denen das Vorderrad in engen horizontalen und vertikalen Schlitzen gefaßt wird und deren wesentliches Merkmal ein Winkel zwischen der Hauptrichtung des oberen Verbindungsstückes und den Horizontalschlitzen von 10 - 20° ist. Bei diesen Modulen verläuft die obere vertikale Führung im Normalfall direkt oberhalb des hinteren Aufnahmeelementes. In einer Variante verläuft der jeweils äußere Führungsstab schräg vom Horizontalschlitz nach oben zum Standbügel. In beiden Fällen erfolgt die seitliche obere Vorderradführung nicht am höchstmöglichen Punkt, so daß ein optimaler seitlicher Verkippungs-/Verbiegungsschutz nicht gegeben ist. Bei der Variante mit nicht parallelen Führungselementen ist die seitliche Führung asymmetrisch und je nach der Reifengröße verschieden gut. Fahrräder mit Frontanbauteilen wie Körben, Frontgepäckträgern oder Kindersitzen können unter Umständen nicht eingeparkt werden, weil die über die Vertikalschlitze hinausragenden konstruktiven Teile wie Verbindungsbügel oder -kette, obere Pfostenenden oder die aufgesetzen vertikalen Anschließungsösen im Weg sind.

Der Erfindung liegt die Aufgabe zugrunde, einen Doppelfahrradparker für zwei Fahrräder A und B zu schaffen, der alle Bedingungen für stabile Vorderradführung erfüllt, bei dem die Anschließmöglichkeiten für den Fahrradrahmen integrale Bestandteile des Systems sind und dessen Konstruktion auch große Fahrrad-Anbauteile wie Frontgepäckträger und Frontkörbe berücksichtigt. Besonderes Merkmal der Anschließmöglichkeiten ist, daß das Fahrrad A am Ständerbereich B angeschlossen wird, und umgekehrt. Die gestellte Aufgabe wird gemäß der Erfindung bei Fahrradparkern mit den Merkmalen des Anspruchs 1 gelöst. Der erfindungsgemäß ausgebildete Parker für je zwei Fahrräder ist sowohl zur Einzelaufstellung als auch zum Aufbau von Fahrrad-Abstellanlagen für eine praktisch beliebige Anzahl von Fahrrad-Abstellplätzen bestimmt.

Nachfolgend wird die Erfindung anhand von Ausführungsbeispielen unter Bezugnahme auf die Zeichnungen beschrieben.

Es zeigen:
- Fig. 1: eine perspektivische Darstellung des kompletten Fahrradparkers in der Grundausführung; die wesentlichen Teile 1a,b - 4a,b sind hierbei fett gezeichnet,
- Fig. 2: eine perspektivische Darstellung des kompletten Fahrradparkers mit gegenüber Fig. 1 veränderten unteren Aufnahmeelementen,
- Fig. 3: eine perspektivische Darstellung des kompletten Fahrradparkers mit einer direkten Verbindung der unteren Aufnahmeelemente und gegenüber Fig 1 veränderter Befestigung der Führungselemente,
- Fig. 4: eine perspektivische Darstellung des kompletten Fahrradparkers mit einer Aufweitung der horizontalen und vertikalen Verbindungsstäbe und Schrägstellung der vertikalen Verbindungsstäbe,
- Fig. 5: eine perspektivische Darstellung der rechten Fahrradparkerhälfte mit in der Form veränderten Seitenstützen,
- Fig. 6: eine perspektivische Darstellung des kompletten Fahrradparkers mit in Richtung zum anzusperrenden Fahrrad hin erweiterten Anschließungsösen.

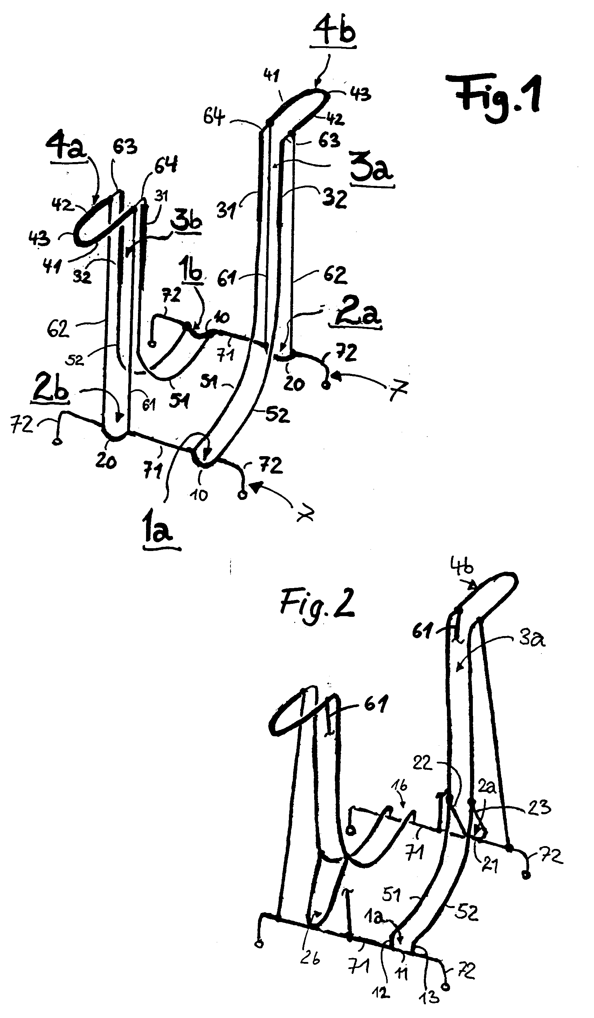

Um heutigen Anforderungen an einen universell einsetzbaren Vorderradhalter gerecht zu werden, muß der obere Führungspunkt gegenüber der Anordnung nach DE-PS 567 315 umgestaltet und in Einstellrichtung nach hinten verlegt werden. Fig. 1 zeigt ein Ausführungsbeispiel eines Doppelfahrradparkers gemäß der Erfindung. Die Grundelemente eines so ausgelegten Vorderradhalters aus metallischem Stab- oder Rohrmaterial für zweiseitige Radeinstellung sind damit Aufnahmeelemente 1a und 1b sowie 2a und 2b und obere Führungselemente 3a und 3b, die in Fig. 1 dick gezeichnet sind. Hinzu kommen als neue wesentliche Teile Ösen 4b und 4a in Höhe der oberen Enden der Führungselemente 3a und 3b, die ein einfaches Anschließen des jeweils daneben befindlichen Fahrradrahmens und des jeweiligen Vorderrades ermöglichen. Die gleichzeitige Sicherungsmöglichkeit des Fahrradrahmens und eines Laufrades am Fahrradparker ist eine häufig erhobene Forderung von Radfahrerverbänden. Besonderes Merkmal eines Doppelfahrradparkers gemäß der Erfindung ist die Komplementarität der zwei Einstellplätze: Die Anschließmöglichkeit für das eine Fahrrad ist jeweils konstruktiver Bestandteil des anderen Einstellplatzes.

Der Abstand der Aufnahmeelemente 1a und 2a sowie 1b und 2b voneinander in Einstellrichtung ist so bemessen, daß große Vorderräder (28 Zoll) gegen ein Wegrollen gesichert sind und kleine Vorderräder (20 Zoll) nicht zu tief eintauchen. In der Praxis hat sich hierfür ein Wert von rund 40 cm bewährt. Die Führungselemente 3a und 3b verlaufen im wesentlichen senkrecht oberhalb der Linien 1a-2a und 1b-2b mit einem gewissen Abstand - ca. 13 cm sind optimal - vor der Mittelsenkrechten zwischen 1a und 2a sowie 1b und 2b. Ihre Höhenlage und Länge sind so bemessen, daß Vorderräder von 20 - 28 Zoll gut geführt werden. Die Aufnahmeelemente 1a, 2a sowie 1b, 2b und die Führungselemente 3a und 3b haben eine solche Breite (rund 50 mm) - im folgenden "optimale Führungsbreite" genannt -, daß die dicksten gängigen Reifen gerade hineinpassen. Durch die vorgenannte Positionierung der Führungselemente 3a und 3b liegen diese in einem Bereich, in dem in der Regel keine Anbauteile vorhanden sind und die durch die Speichen gegebene Querschnittsbreite des Vorderrades gerade geringer ist als die optimale Führungsbreite, so daß man der Führung gemäß dem idealen Drei-Punkte-Prinzip am nächsten kommt. Die an den oberen Enden der Führungselemente 3a und 3b angebrachten Anschließungsmöglichkeiten in Form von waagrechten Ösen 4b und 4a befinden sich auf der Höhe des unteren Rahmenrohres in der Nähe des Steuerkopfes des von der jeweils anderen Seite eingestellten Fahrrades mit großen Laufrädern (28 Zoll). Damit das Anschließen von Fahrradrahmen und Vorderrad mit kurzem Seil- oder Bügelschloß möglich wird, darf der Abstand zwischen den beiden Radeinstellungen nicht zu groß sein. Der Abstand darf allerdings auch nicht zu klein sein, da sich sonst die beiden eingestellten Vorderräder beispielsweise mit den Achsen berühren würden. In der Praxis hat sich ein Wert von rund 19 cm bewährt, gemessen zwischen den Mitten der Aufnahmeelemente 1a und 2b. Konstruktive Verbindungen 51, 52 zwischen den Aufnahmeelementen 1a, 1b, 2a und 2b, den Führungselementen 3a, 3b und den Ösen 4b, 4a sind so angeordnet, daß sie den Raum meiden, in dem sich beim Ein-/Ausparken oder im Parkzustand mögliche Anbauteile wie Frontgepäckträger oder die Vorderradachse befinden oder die Speichen breiter sind als die optimale Führungsbreite. Dieser Bereich, in dem sich keine Teile der Fahrradparkerkonstruktion befinden dürfen, wird fortan mit "verbotener Bereich" bezeichnet. Zu diesem verbotenen Bereich zählen auch Bereiche oberhalb des Vorderrades, in dem sich häufig Anbauteile wie beispielsweise Lampen und Frontkörbe befinden.

Nachfolgend wird die konstruktive Ausgestaltung des in Fig. 1 dargestellten Ausführungsbeispiels näher erläutert. Für die Aufnahmeelemente 1a, 1b, die hier die Form von Mulden 10, 20 aus Stab- oder Rohrmaterial haben, die Führungselemente 3a, 3b, die aus zwei etwa senkrechten Führungsstäben 31, 32 gebildet sind, und die Anschließungsösen 4a, 4b, die aus drei Teilen 41, 42, 43 bestehen, gelten die oben gemachten Angaben für Lage und Abmessungen. Statt der Führungsstäbe 31, 32 sind beispielsweise auch Führungsbleche oder -profile verwendbar. Die vier wesentlichen Elemente des Parkers, d.h. 1a, 1b bis 4a, 4b sind miteinander oder mit dem Bodenrahmen verbunden, wobei stets der "verbotene Bereich" von Verbindungsteilen ausgespart bleibt. Die Führungsmulden 10 und 20 sind durch waagrechte Verbindungsstücke 71 verbunden. Alle Mulden 10 und 20 gehen seitlich in Winkelelemente 72 über, durch die der Parker am Boden oder an einem Bodenrahmen befestigbar ist. Zwischen der vorderen Führungsmulde 10 und den Führungsstäben 31, 32 der Führungselemente 3a, 3b verlaufen geschwungene Verbindungsstäbe 51, 52 so mit einem Abstand zueinander, der der optimalen Führungsbreite entspricht, daß sie bei Mulde 10 etwa waagrecht beginnen und bei den Führungsstäben 31, 32 etwa senkrecht enden und dabei annähernd in der Form eines Viertelkreises verlaufen. Dieser Verlauf gewährleistet, daß nicht in den verbotenen Bereich eingedrungen wird. Die Ösen 4b, 4a sind mit den Führungselementen 3a, 3b über kurze Abschnitte 63, 64 verbunden. Etwa an den Verbindungspunkten zwischen der Öse 4a, 4b und den Abschnitten 63, 64 sind Stützstäbe 61, 62 angebracht, die senkrecht oder schräg nach unten zu den Verbindungsstücken 71 und den Winkelelementen 72 verlaufen.
Der so geschaffene Doppelparker umfaßt den Umfang des Vorderrades zu mehr als 50 %, wodurch das Fahrrad sehr stabil steht und dennoch außer mit dem Vorderreifen den Ständer an keiner Stelle berührt.

Bei einer Ausführung nach Fig. 2 mit erhöhter seitlicher Führung der unteren Aufnahmeelementen ist das Aufnahmeelement 1a, 1b durch einige Zentimeter senkrecht oder schräg nach oben verlaufenden Aufnahmeabschnitte 12 und 13 der geschwungenen Verbindungsstäbe 51', 52' gebildet. Anschließend verlaufen die Verbindungsstäbe 51', 52' im wesentlichen wie die Stäbe 51, 52 hinauf zu den Führungselementen 3a, 3b. Das hintere Aufnahmeelement 2a, 2b ist durch einen am Bodenrahmen befestigten Bogen 21 geschaffen. Dieser ist durch im wesentlichen schräg verlaufende Stäbe 22 und 23 mit den Stäben 51', 52' verbunden. In Fig. 2 wurden der Übersichlichkeit halber jeweils nur Anfang und Ende des einen Stützstabes 61 gezeichnet.

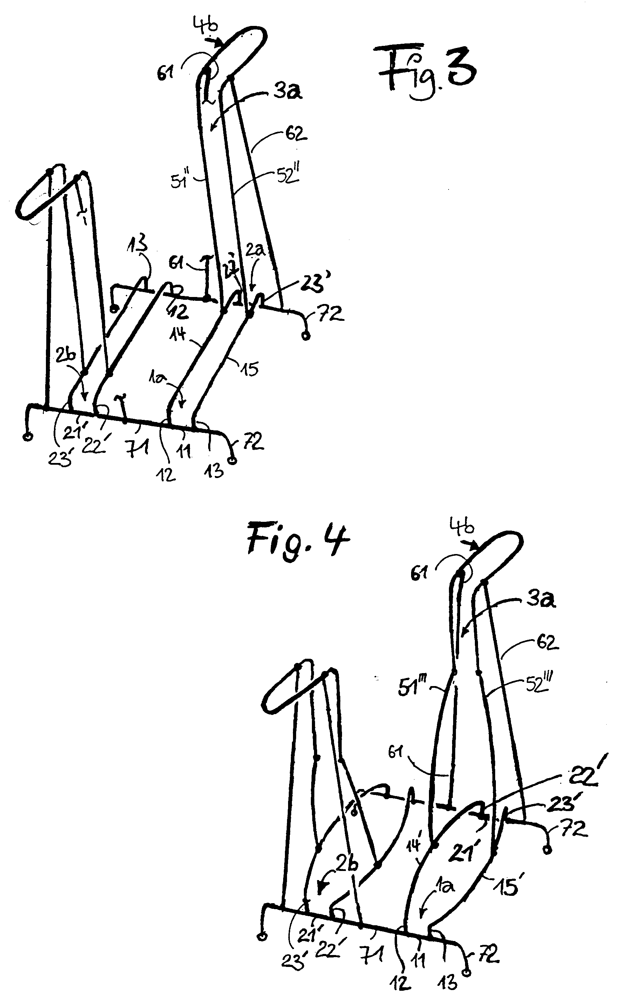

Die Variante nach Fig. 3 kommt mit einfacheren Biegelinien aus und unterscheidet sich von der in Fig. 2 dadurch, daß auch das hintere Aufnahmeelement 2a, 2b durch senkrecht oder schräg nach oben laufende Abschnitte 22', 23' mit einer Länge von einigen Zentimetern gebildet wird. Zwischen den Abschnitten 12 und 22' sowie 13 und 23' verlaufen Horizontalstäbe 14 und 15. Von diesen Horizontalstäben 14 und 15 verlaufen die Verbindungsstäbe 51'' und 52'' im wesentlichen senkrecht und geradlinig nach oben zu den Führungselementen 3a, 3b.

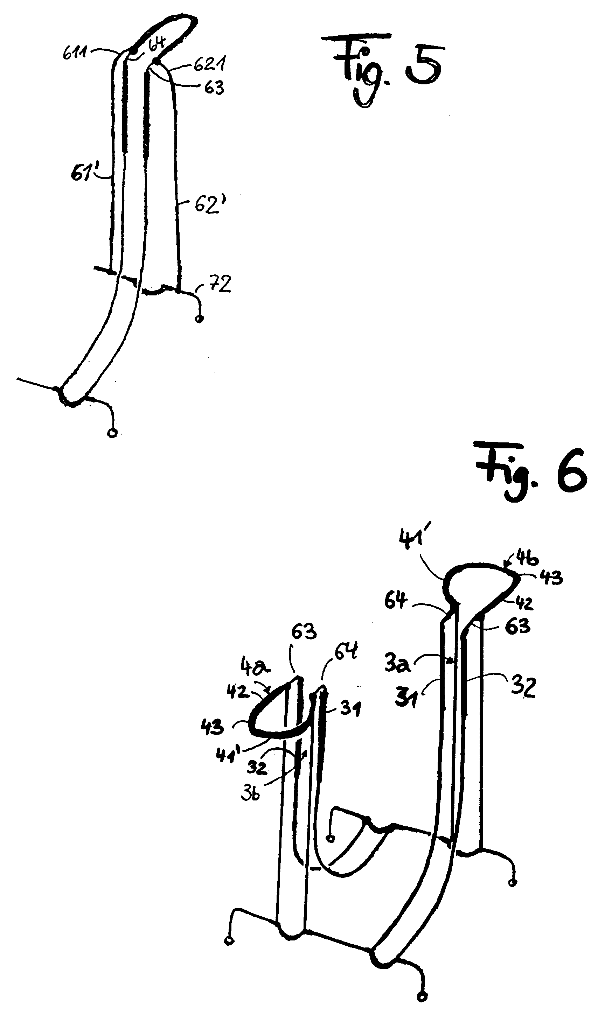

Die Variante nach Fig. 4 führt durch die unten verbreiterte Konstruktion zu größerer Stabilität und unterscheidet sich von der in Fig. 3 dadurch, daß die Verbindungsstäbe 51''' und 52''' von den Führungselementen 3a, 3b ausgehend im Bogen um den verbotenen Bereich schräg nach unten geführt werden, wo sie mit ebenfalls im Bogen geführten horizontalen Stäben 14' und 15' verbunden werden. Die dabei entstehenden Verbindungspunkte können bis zu den Aufnahmeabschnitten 12, 13 zu liegen kommen. In dem durch die gebogenen Verbindungsstäbe 51''' und 52''' umschriebenen Bereich ergibt sich so genügend Platz für in Achsnähe angebrachte Fahrradanbauteile.

In einer weiteren Variante nach Fig. 5 beginnen die Stützstäbe 61', 62' oben an den Abschnitten 63, 64 mit Bögen 611, 621 und laufen dann zum Bodenrahmen.

In der Variante nach Fig. 6 wird die Öse 4a, 4b durch Führung des Abschnittes 41 in Form eines Bogens 41' in Richtung des anzuschließenden Fahrrades um einige Zentimeter vergrößert, damit ein Fahrradrahmen auch mit einem besonders kurzen Seil- oder Bügelschloß anschließbar ist.

Bei Großanlagen wird man aus Platzgründen nicht auf höhenversetztes Parken verzichten können und deshalb die Fahrräder abwechselnd in Hoch/Tief-Stellung unterbringen müssen. Der Höhenunterschied entsteht durch Distanzelemente zum Boden oder zum Bodenrahmen hin und ist mit etwa 25 cm so bemessen, daß die Fahrräder auf jeder Seite einer Reihenanlage abwechselnd hoch und tief eingestellt werden können, wobei ihr Abstand kleiner als die Lenkerbreite sein darf und diese sich trotzdem nicht miteinander verhaken.

## Patentansprüche

1. Doppelfahrradparker zum Einstellen von zwei Fahrrädern aus entgegengesetzt parallelen Einstellrichtungen mit einem Grundgestell (71, 72), auf dem für jede Einstellrichtung eine Vorderradhalterung angeordnet ist, die im Bereich des Grundgestells (71, 72) je ein in Einstellrichtung vorderes Aufnahmeelement (1a, 1b) und je ein hinteres Aufnahmelement (2a, 2b) aufweist, deren Abstand in Einstellrichtung so bemessen ist, daß einerseits große Vorderräder von in den Doppelfahrradparker einstellbaren Fahrrädern gegen ein Wegrollen gesichert sind und andererseits kleine Vorderräder von in den Doppelfahrradparker einstellbaren Fahrrädern nicht zu tief eintauchen, und die über ein im wesentlichen vertikal ausgerichtetes schlitzartiges oberes Führungselement (3a, 3b) in einem Höhenbereich verfügt, der sowohl großen als auch kleinen Vorderrädern im oberen Bereich des Vorderradreifens einen seitlichen Halt bietet, wobei die Breite der Aufnahmeelemente (1a, 2a, 1b, 2b) sowie der oberen Führungselemente (3a, 3b) der Breite der gängigen Fahrradreifen entspricht,
wobei der Abstand der beiden Vorderradhalterungen quer zur Einstellrichtung so bemessen ist, daß sich einerseits die Achsen und Anbauteile der einstellbarren Fahrräder nicht berühren und daß andererseits ein einstellbares Fahrrad an einer ihm zugeordneten Anschließungsöse (4a, 4b) mit kurzem Seil- oder Bügelschloß anschließbar ist,
**dadurch gekennzeichnet,**
daß sich die schlitzartigen Führungselemente (3a, 3b) in Einstellrichtung oberhalb des letzten Drittels der gedachten Verbindungslinie zwischen den vorderen Aufnahmeelementen (1a, 1b) und den hinteren Aufnahmeelementen (2a, 2b), jedoch nicht direkt oberhalb der hinteren Aufnahmeelemente (2a, 2b) befinden,
daß jede Anschließungsöse (4b, 4a) eine horizontale Ebene aufspannt, deren maximale Höhe nicht über dem oberen Ende der oberen Führungselemente (3a, 3b) liegt und sich soweit in Einstellrichtung erstreckt, daß ein von der anderen Seite in den Doppelfahrradparker einstellbares Fahrrad mit kurzem Seil- oder Bügelschloß mit seinem Rahmen und in der Regel auch mit seinem Vorderrad daran anschließbar ist und
daß bei jeder der beiden Vorderradhalterungen die Aufnahmeelemente (1a, 2a, 1b, 2b), die Führungselemente (3a, 3b) und die Anschließungsösen (4b, 4a) mit Verbindungselementen, die außerhalb des Raumprofils von in den Doppelfahrradparker einstellbaren Fahrrädern einschließlich üblicher Zusatzausrüstungen wie Frontgepäckträger und Frontkörbe beim Einstellen und im eingestellten Zustand verlaufen, untereinander und mit dem Grundgestell stabil verbunden sind.

2. Doppelfahrradparker nach Anspruch 1, **dadurch gekennzeichnet,** daß die oberen Führungselemente (3a, 3b) als Führungsstäbe (31,32) ausgebildet sind.

3. Doppelfahrradparker nach Anspruch 1 oder 2, **dadurch gekennzeichnet,** daß die vorderen Aufnahmeelemente (1a, 1b) durch Verbindungsstäbe (51, 52) mit den Führungselementen (3a, 3b) verbunden sind, wobei diese Verbindungsstäbe (51, 52) zunächst etwa waagrecht, danach etwa auf einem Viertelkreis und schließlich etwa vertikal zu den unteren Enden der Führungselemente (3a, 3b) mit einem Abstand zueinander verlaufen, der der Breite der gängigen Fahrradreifen entspricht.

4. Doppelfahrradparker nach einem der Ansprüche 1 - 3, **dadurch gekennzeichnet,** daß die Anschließungsösen (4b, 4a) im wesentlichen aus zwei geraden Abschnitten (41, 42) und einem diese Abschnitte verbindenden Bogen (43) bestehen und so mittels Verbindungsabschnitten (63, 64) mit den oberen Führungselementen (3a, 3b) verbunden sind, daß das jeweils nebenstehende Fahrrad mit kurzem Seil- oder Bügelschloß mit seinem Rahmen und in der Regel auch mit seinem Vorderrad an dem ihm benachbarten Ösenteil (41) anschließbar ist.

5. Doppelfahrradparker nach einem der Ansprüche 1 - 4, **dadurch gekennzeichnet,** daß etwa von den Verbindungspunkten zwischen den Anschließungsösen (4a, 4b) und deren Verbindungsabschnitten (63, 64) Stützstäbe (61, 62) senkrecht oder leicht schräg zum Bodenrahmen (7) verlaufen.

6. Doppelfahrradparker nach einem der Ansprüche 1 - 5, **dadurch gekennzeichnet,** daß die unteren Aufnahmeelemente (1a, 2a, 1b, 2b) als Mulden (10, 20) ausgeführt sind.

7. Doppelfahrradparker nach einem der Ansprüche 1 - 6, **dadurch gekennzeichnet,** daß die vorderen Aufnahmeelemente (1a, 1b) durch jeweils ein horizontales Trägerelement (11) und senkrecht oder schräg nach oben laufende Abschnitte (12, 13) von einigen Zentimetern Länge gebildet sind, die in die Verbindungsstäbe (51, 52) übergehen, und daß die hinteren Aufnahmeelemente (2a, 2b) durch jeweils am Bodenrahmen (7) befestigte Bögen (21) gebildet sind, die über schräg verlaufende Stäbe (22, 23) mit den Verbindungsstäben (51, 52) verbunden sind.

8. Doppelfahrradparker nach einem der Ansprüche 1 - 6, **dadurch gekennzeichnet,** daß alle unteren Aufnahmeelemente (1a, 1b, 2a, 2b) aus horizontalen Trägerelementen (11, 21') und senkrecht oder schräg nach oben laufenden Abschnitten (12, 13, 22', 23') von einigen Zentimetern Länge gebildet sind, wobei die letzteren durch im wesentlichen horizontal verlaufende gerade Stäbe (14, 15) verbunden sind, von denen aus Verbindungsstäbe (51'', 52'') im wesentlichen senkrecht zu den Führungselementen (3a, 3b) verlaufen.

9. Doppelfahrradparker nach Anspruch 8, **dadurch gekennzeichnet,** daß die Verbindungsstäbe (51''', 52''') von den Führungselementen (3a, 3b) ausgehend, schräg im Bogen zu den ebenfalls im Bogen geführten horizontalen Stäben (14', 15') so geführt ist, daß sie keine Fahrrad-Anbauteile berühren, wobei die Verbindungsstäbe (51''', 52''') auch erst im Bereich der vorderen Aufnahmeelemente (1a, 1b) enden können.

10. Doppelfahrradparker nach einem der Ansprüche 1 - 9, **dadurch gekennzeichnet,** daß die seitlichen Stützstäbe (61', 62') nicht geradlinig schräg nach unten verlaufen, sondern mit kurzen Bögen (611, 621) und dann im wesentlichen senkrecht zu den Bodenelementen (71, 72) verlaufen.

11. Doppelfahrradparker nach einem der Ansprüche 1 - 10, **dadurch gekennzeichnet,** daß der dem jeweils anderen Fahrrad zugewandte Ösenabschnitt die Form eines Bogens (41') erhält und dadurch die Ösen (4a, 4b) dem anzuschließenden Fahrrad näher kommen.

12. Doppelfahrradparker nach einem der Ansprüche 1 - 11, **dadurch gekennzeichnet,** daß die Aufnahmeelemente (1a, 2a, 1b, 2b), die Führungselemente (3a, 3b), die Anschließungsösen (4a, 4b) und die Verbindungselemente durch Distanzstücke auf eine solche Höhe über dem Boden gebracht sind, daß der dadurch geschaffene Doppelparker für die Hochstellung von Fahrrädern mit den Doppelparkern für die Tiefstellung in Reihenanlagen in einem Abstand kombinierbar ist, der kleiner als die Lenkerbreite ist.

## Claims

1. Double bicycle stand for parking two bicycles in opposite parallel parking direction with a base support (71, 72) on which a front wheel support for each parking direction is placed, comprising in the region of the base support (71, 72) with respect to the parking direction a front supporting element (1a, 1b) and a back supporting element (2a, 2b), whose distance in parking direction being chosen in such a way, that on the one hand big front wheels of bicycles, which may be parked in the stand, are secured against rolling away, and that on the other hand small front wheels of bicycles, which may be parked in the stand, are not placed in a too low position, and comprising a upper guiding element (3a, 3b) shaped like a slit and substantially vertically aligned at such a level, that both big and small front wheels are securely supported at their upper side areas, wherein the width of the supporting elements (1a, 1b, 2a, 2b) and the width of the guiding elements (3a, 3b) correspond to the width of mainly used bicycle tires and
wherein the distance transverse to the parking direction between both front wheel supports is chosen in such a way, that on the one hand the shafts and parts added to the bicycle, which may be parked in the stand, do not touch each other and that on the other hand a bicycle, which may be parked in the stand, can be locked to an associated locking loop (4a, 4b) by means of a short U-lock or cable lock, **characterized in,**
that the guiding elements (3a, 3b) shaped like a slit are located with respect to the parking direction above the back third part of the line thought to connect the front supporting elements (1a, 1b) with the back supporting elements (2a, 2b), but are not located directly above the back supporting element (2a, 2b),
that each locking loop (4b, 4a) extends a horizontal plane, whose maximal height is not above the upper end of the guiding elements (3a, 3b), and extends over such a distance in parking direction, that a bicycle, which may be parked in the stand from the other side, can be locked with its frame and usually also with its front wheel to the locking loop by means of a short U-lock or cable lock,
and that the supporting elements (1a, 2a, 1b, 2b), the guiding elements (3a, 3b) and the locking loops (4b, 4a) of each front wheel support are connected among each other and to the base support in a stable way by connecting elements placed during the parking procedure and while the bicycles being parked beyond the clearance of the bicycles, that may be parked in the stand, and of usual accessories as front carriers and front baskets.

2. Double bicycle stand according to claim 1, characterized in that the upper guiding elements (3a, 3b) are formed by guiding rods (31, 32).

3. Double bicycle stand according to claim 1 or 2, characterized in that the front supporting elements (1a, 1b) are connected to the guiding elements (3a, 3b) by connecting rods (51, 52) extending in the beginning nearly horizontally, then following nearly a quarter of a circle and finally extending vertically to the lower ends of the guiding elements (3a, 3b), the spacing between connecting rods corresponding to the width of mainly used bicycle tires.

4. Double bicycle stand according to one of the claims 1 to 3, characterized in that the locking loops (4b, 4a) consist essentially of two straight sections (41, 42) and a bow shaped part (43) connecting these sections and are connected to the upper guiding elements (3a, 3b) by connecting sections (63, 64) in such a way, that each bicycle parked next to the locking loop can be locked with its frame and usually also with its front wheel to the neighbouring part (41) of the locking loop by means of a short U-lock or cable lock.

5. Double bicycle stand according to one of the claims 1 to 4, characterized in that the supporting rods (61, 62) are extending vertically or in a slightly inclined upward direction to the base frame (7) from around the connecting points between the locking loops (4a, 4b) and their connecting sections (63, 64).

6. Double bicycle stand according to one of the claims 1 to 5, characterized in that the lower supporting elements (1a, 2a, 1b, 2b) compris the shape of depressions (10, 20).

7. Double bicycle stand according to one of the claims 1 to 6, characterized in that the front supporting elements (1a, 1b) are formed by a horizontal carrying element (11) and by sections (12, 13) of a length of a few centimeters extending vertically or in an inclined upward direction and turning into the connecting rods (51, 52), and in that the back supporting elements (2a, 2b) are formed by rounded sections (21) fixed to the base frame (7) and connected to the connecting rods (51, 52) by inclined rods (22, 23).

8. Double bicycle stand according to one of the claims 1 to 6, characterized in that all lower supporting elements (1a, 1b, 2a, 2b) are formed by horizontal carrying elements (11, 21') and sections (12, 13, 22', 23') of a length of a few centimeter extending vertically or in an inclined upward direction, wherein said sections are connected by straight rods (14, 15) extending essentially in a horizontal direction, from which connecting rods (51'',52'') extend in an essentially vertical direction to the guiding elements (3a, 3b).

9. Double bicycle stand according to claim 8, characterized in that the connecting rods (51''', 52''') are guided in such a rounded and inclinded way from the guiding elements (3a, 3b) to the horizontal rods (14', 15') extending in a rounded way as well, that no parts added to the bicycle are touched, wherein the connecting rods (51''', 52''') may also only end in the region of the front supporting elements (1a, 1b).

10. Double bicycle stand according to one of the claims 1 to 9, characterized in that the lateral supporting rods (61', 62') do not extend in a straight and inclined downward direction, but compris short rounded sections (611, 621) and then extend in a essentially vertical direction to the ground elements (71, 72).

11. Double bicycle stand according to one of the claims 1 to 10, characterized in that each section of the locking loop facing the other bicycle comprises the shape of a bow (41') in such a way, that the locking loops (4a, 4b) approach the bicycle to be locked.

12. Double bicycle stand according to one of the claims 1 to 11, characterized in that the supporting elements (1a, 2a, 1b, 2b), the guiding elements (3a,3b), the locking loop (4a, 4b) and the connecting elements are brought at such a level above ground by separating sections, that the double stand thus created for an elevated parking may be combined with a double stand created for a lower parking to park a great number of bicycles in a row at a distance, that is smaller than the width of bicycle handles.

## Revendications

1. Porte-vélo double pour garer deux vélos en disposition parallèle opposée avec un chevalet de base (71, 72), sur lequel un support pour la roue avant est placé comprenant près du chevalet du base (71, 72) en direction de disposition un élément de réception avant (1a, 1b) et un élément de réception arrière (2a, 2b), dont la distance en direction de disposition est choisie de telle manière, que d'une part des grandes roues avant des vélos, qui peuvent être garés au porte-vélo, ne peuvent pas partir en roulant, et de telle manière, que d'autre part des petites roues avant des vélos, qui peuvent être garés au porte-vélo, ne sont pas placées trop bas, et comprenant un élément supérieur de guidage (3a, 3b), dont la forme ressemble à une fente, orienté verticalement et disposé à un niveau, qui offre un support lateral à la région supérieure pas seulement des grandes roues avant mais aussi des petites roues avant, la largeur des éléments de réception (1a, 2a, 1b, 2b) et de l'élément de guidage (3a, 3b) correspondant à la largeur des pneus courants,
et la distance à travers de la direction de disposition entre les deux supports pour les roues avant étant choisie de sorte, que d'une part les axes et les parts accessoires d'un vélo, qui peut y être garé, ne se touchent pas, et de sorte, que d'autre part un vélo, qui peut y être garé, peut être attaché à un anneau coordonné d'attachement (4a, 4b) par un anti-vol court en U ou un anti-vol court à câble, **caractérisé en ce**,
que les éléments de guidage (3a, 3b), dont la forme ressemble à une fente, sont disposés en direction de disposition audessus du dérnier tiers de la ligne pensée de s'étendre entre l'élément de réception avant (1a, 1b) et l'élément de réception arrière (2a, 2b), mais pas directement audessus de l'élément de réception arrière (2a, 2b),
que chaque anneau d'attachement (4b, 4a) se trouve dans un plan horizontal, dont le niveau le plus haut ne se trouve pas audessus des extrémités supérieures des éléments de guidage (3a, 3b) et qui s'étend autant en direction de dispostion, qu' un vélo, qui peut être garé au porte-vélo de l'autre côté, peut y être attaché avec son cadre et généralement aussi avec la roue avant par un anti-vol court en U ou un ant-vol court à câble,
et que les éléments de réception (1a, 2a, 1b, 2b), les éléments de guidage (3a, 3b) et les anneaux d'attachement (4b, 4a) des deux supports pour les roues avant sont interconnectés entre eux at avec le chevalet de base d'une manière stable et à l'extérieur du profil des vélos, qui peuvent être garés au porte-vélo, et aussi des parts accessoires courantes, comme des porte-bagages avant ou des paniers de guidon, pas seulement pendant la mise en place mais aussi à condition garée.

2. Porte-vélo double selon la revendication 1, caractérisé en ce, que les éléments supérieurs (3a, 3b) sont formés par des barres de guidage (31, 32).

3. Porte-vélo double selon la revendication 1 ou 2, caractérisé en ce, que les éléments de réception avant (1a, 1b) sont liés à des éléments de guidage (3a, 3b) par des barres de rattachement (51, 52), qui poursuivent d'abord un profil à peu près horizontal, ensuite un quart de cercle et finalement un profil à peu près vertical jusqu'aux extrémités inférieures des éléments de guidage (3a, 3b) à une distance entre elles, qui correspond à la largeur de pneus courants.

4. Porte-vélo double selon une des revendications 1 - 3, caractérisé en ce, que les anneaux d'attachement (4b, 4a) consistent essentiellement dans deux parties linéaires (41, 42) et dans un arc (43) liant les deux parties linéaires et sont liés aux éléments supérieurs de guidage (3a, 3b) par des parties de rattachement (63, 64) de telle manière, que chaque vélo mis en place à côté de l'autre peut être attaché à la partie voisine de l'anneau (41) avec son cadre et généralement aussi avec sa roue avant par un anti-vol court en U ou par un anti-vol court à câble.

5. Porte-vélo double selon une des revendications 1 - 4, caractérisé en ce, que des barres d'appui (61, 62) poursuivent un profil vertical ou un peu incliné jusqu'au cadre de base (7) tout en partant de points de liaison entre les anneaux d'attachement (4a, 4b) et les parties de rattachement (63, 64).

6. Porte-vélo double selon une des revendications 1 - 5, caractérisé en ce, que les éléments inférieurs de réception (1a, 2a, 1b, 2b) sont formés par des parties creuses (10, 20).

7. Porte-vélo double selon une des revendications 1 - 6, caractérisé en ce, que les éléments de réception avant (1a, 1b) sont formés par un élement horizontal d'appui (11) et par des parties (12, 13) d'une longuer de quelques centimètres qui poursuivent un profil vertical ou incliné vers le haut et qui se changent en les barres de rattachement (51, 52), et que les éléments de réception arrière (2a, 2b) sont formés par des arcs (21) fixés au cadre de base (7) et liés aux barres de rattachement (51, 52) par des barres (22, 23) qui poursuivent un profil incliné.

8. Porte-vélo double selon une des revendications 1 - 6, caractérisé en ce, que tous les éléments inférieurs de réception (1a, 1b, 2a, 2b) sont formés par des éléments horizontals d'appui (11, 21') et par des parties (12, 13, 22', 23') d'une longuer des quelques centimètres, qui poursuivent un profil vertical ou incliné vers le haut, les dérnieres étant liées par des barres (14, 15) linéaires et horizontales, dont les barres de rattachement (51'', 52'') partent et poursuivent un profil vertical jusqu'aux éléments de guidage (3a, 3b).

9. Porte-vélo double selon la revendication 8, caractérisé en ce, qu'en partant des éléments de guidage (3a, 3b) et en poursuivant un profil oblique en forme d'un arc les barres de rattachement (51''', 52''') sont conduites aux barres horizontales (14', 15'), qui pousuivent également un profil en forme d'un arc, de telle manière, qu'elles ne touchent pas des parts accessoires d'un vélo tout en pouvant aussi se terminer seulement prés des éléments avant de réception (1a, 1b).

10. Porte-vélo double selon une des revendications 1 - 9, caractérisé en ce, que les barres laterales d'appui (61', 62') ne poursuivent pas un profil linéaires vers le bas mais un profil en forme d'un arc court (611, 621) et ensuite essentiellement vertical jusqu'aux éléments de base (71, 72).

11. Porte-vélo double selon une des revendications 1 - 10, caractérisé en ce, que les parties des anneaux en face de l'autre vélo ont la forme d'un arc (41') de sorte, que les anneaux (4a, 4b) s'approchent au vélo, qui doit y être attaché.

12. Porte-vélo double selon une des revendications 1 - 11, caractérisé en ce, que les éléments de réception (1a, 2a, 1b, 2b), les éléments de guidage (3a, 3b) et les anneaux d'attachement (4a, 4b) et les éléments de rattachement sont élevés à un tel niveau audessus du sol par des pièces de séparation que le porte-vélo cré ainsi pour la disposition élevée des vélos peut être combiné avec un porte-vélo pour la disposition basse des vélos pour garer un grand nombre de vélos en série à une distance supérieure aux guidons.
